# EUROPEAN PATENT APPLICATION

(11) **EP 2 022 326 A1**
(43) Date of publication of application: **11.02.2009**
(21) Application number: 07114132.9
(22) Date of filing: 09.08.2007
(51) Int. Cl.: A01K 13/00

(54) **A horse blanket**

(71) Applicant: Timmers, Edgar, 5364 PR Escharen (NL); De Landtsheer, Stefaan, 2880 Bornem (BE)
(72) Inventor: Timmers, Edgar, 5364 PR Escharen (NL); De Landtsheer, Stefaan, 2880 Bornem (BE)
(74) Representative: Quintelier, Claude

(57) **Abstract**

A horse blanket (2) comprising a neckpiece (3) and a body piece (4) having a belly protector (5), said neckpiece (3) being provided for being applied around a neck of the horse, said body piece (4) being provided for being spread over the back of the horse down to the tail and said belly protector (5) being provided for being spread over the belly of the horse, whereby said belly protector (5) is formed by a flap attached to said body piece (4) along a first side thereof, said flap and said body piece (4) being provided with first co-operating attachment means (6,7,8,9) for a release attachment of said belly protector (5) to a second side of said body piece (4), said second side being situated opposite to side first side.

## Description

The invention relates to a horse blanket comprising a neckpiece and a body piece having a belly protector, said neckpiece being provided for being applied around a neck of the horse, said body piece being provided for being spread over the back of the horse down to the tail and said belly protector being provided for being spread over the belly of the horse.

Such a horse blanket is known and for example sold by the Swedish company Boet AB in Hallstavik Sweden. When applied on the horse, the blanket protects the horse against infestations by flies, mosquitoes or other flying insects. Such infestations could cause summer-eczema, also known as sweet-itch. The known horse blanket is formed by two separate pieces, on the one hand the neckpiece and the body piece and on the other hand the belly protector. The neckpiece, which forms an integral part with the body piece, is formed by a cylindrical part which has to be pulled over the horse's head. Thereafter the body piece is applied over the back of the horse. The belly protector is thereafter wrapped around the horse's body thereby partially covering the body piece.

A drawback of the known horse blanket is that it is rather cumbersome to apply the belly protector in a secure manner. As the belly protector forms a separate part, it is necessary to first start on one side of the horse and thereafter go to the other side, or to have two persons working together and each standing at a different side of the horse.

The object of the present invention is to provide a horse blanket which is less cumbersome to apply even if it is to be applied by one single person.

For this purpose a horse blanket according to the present invention is characterised in that said belly protector is formed by a flap attached to said body piece along a first side thereof, said flap and said body piece being provided with first co-operating attachment means for a release attachment of said belly protector to a second side of said body piece, said second side being situated opposite to side first side. As the belly protector is formed by a flap attached to the body piece, the belly protector forms an integral piece of the blanket. Once the body piece is applied on the horse, the belly protector will hang loosely along the first side of the body piece. The user can then stand at the other side of the horse and simply pick up the belly protector without having to go from one side of the horse to the other. The presence of the first co-operating attachment means makes it possible to fix the belly protector to the body part, thereby taking care that the belly is well protected.

A first preferred embodiment of a horse blanket according to the invention is characterised in that said neckpiece is formed by an open blanket section having free end parts, in such a manner as to be laid down over the mane of the horse when applying the blanket on the horse thereby enabling said free end parts to freely extend along both sides of the neck, said open blanket section being provided with second co-operating attachment means for a release attachment of said free end parts to each other when said blanket section is wrapped around said neck. In such a manner, the neckpiece can be easily wrapped around the horse's neck and there is no need to pull the neckpiece over the neck as it is the case in the prior art. The risk that the horse would panic and run away while pulling the neckpiece over his neck is thereby substantially reduced.

A second preferred embodiment of a horse blanket according to the invention is characterised in that it further comprises an udder protector, said udder protector and said body piece being provided with third co-operating attachment means for a release attachment of said udder protector to said body piece. In particular for mares, the udder protector offers a favourable solution. Moreover, by having a separate udder protector, the same blanket can be used for all horses and it will be sufficient for a mare to add the udder protector.

A third preferred embodiment of a horse blanket according to the invention is characterised in that it further comprises a head mask, said head mask and said neckpiece being provided with fourth co-operating attachment means for a release attachment of said head mask to said neck piece. The addition of the head mask enables to protect the head too. The presence of the attachment means enables to apply the head mask separately when the neckpiece and the body piece are already applied.

Preferably, said co-operating attachment means comprise loop and hook means, said hook being provided to engage with said loop. This provides a suitable and reliable solution for the attachment means, which moreover can be easily attached and released.

Preferably said co-operating attachment means comprise belts and clips. This provides a reliable solution for obtaining a suitable covering of the horse well adapted to the body of the horse.

The invention will now be described in more details with respect to the annexed drawings, showing a preferred embodiment of a horse blanket according to the invention.

In the drawings :
figure 1 shows a horse on which the horse blanket is applied in its open state;
figure 2 shows a horse on which the horse blanket is applied in its closed state;
figure 3 shows an udder protector as part of the horse blanket;
figure 4 shows a part of the back of a horse covered with the horse blanket comprising the udder protector; and
figure 5 shows a horse on which the horse blanket including the head mask is applied.

In the drawings a same reference sign has been allocated to a same or analogous element.

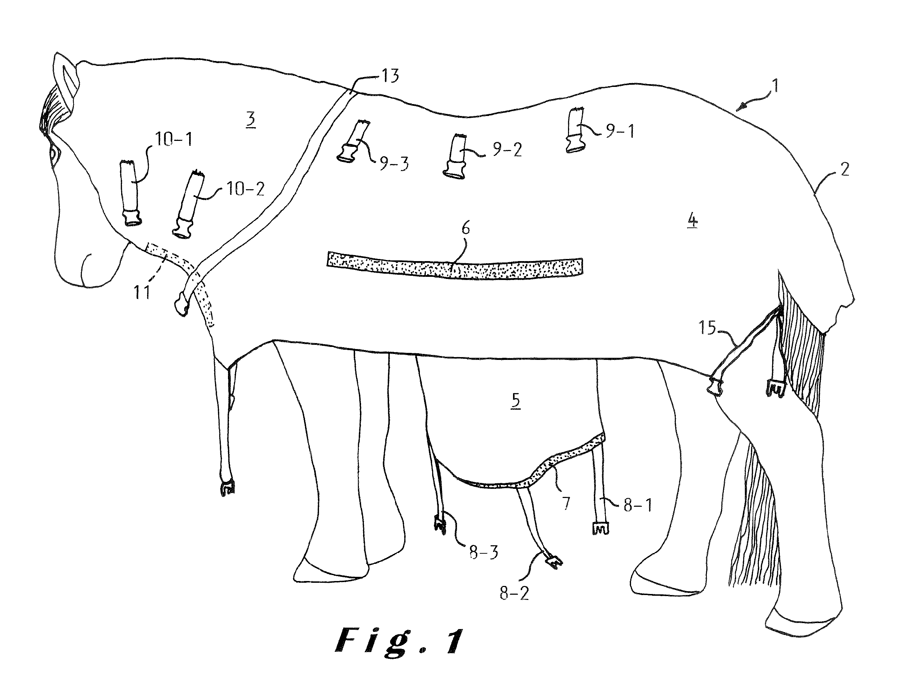

Figure 1 shows a horse 1 on which the horse blanket 2 is applied in its open state. The horse blanket comprises a neckpiece 3 and a body piece 4 having a belly protector 5. The neckpiece and the body piece form an integer. The neckpiece is provided for being applied around a neck of the horse, whereas the body piece is provided for being spread over the back of the horse down to the tail. The belly protector 5 is formed by a flap attached to the body piece along a first side of the body piece. The belly protector is provided for being spread over the belly of the horse. Preferably, the belly protector is stitched along the first side of the body piece, but other means such as a zipper could also be envisaged for attaching the belly protector to the body part. Eventually the flap would be formed as an integral part of the body piece. The belly protector extends between a foreleg and a hind leg of the horse when applied on the horse as shown in figure 1.

The body piece 4 and the flap 5 are both provided with first co-operating attachment means (6,7; 8,9) for a release attachment of the belly protector to a second side of the body piece, whereas the second side is situated opposite to the first side. The first co-operating attachment means preferably comprise loop 5 and hook 6 means, for example Velcro ® which preferably extends as a stroke over a distance which is somewhat less than the distance between the forelege and the hind leg of a horse. The attachment means further preferably comprise belts and clips (8, 9). In the drawing three belts and clips (8-1, 8-2, 8-3; 9-1, 9-2, 9-3) are illustrated. It should however be clear that the present invention is not limited to three belts and clips and that at least one belt and clip could be sufficient. Moreover, other alternatives such as Velcro strips radially extending over the body could be used instead of the belts and clips.

The neckpiece 3 is formed by an open blanket section having free end parts in such a manner as to be laid down over the mane of the horse when the blanket is applied on the horse. As illustrated in figure 1, once the horse blanket is laid over the horse's mane, the free end parts hang loosely downwards and extend on both sides of the neck.

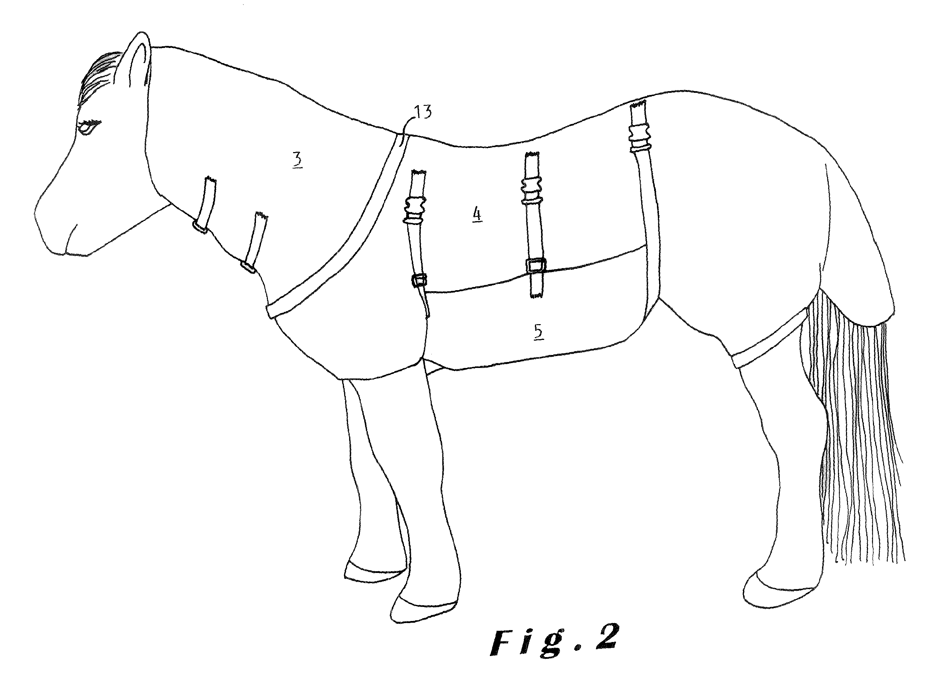

The open blanket section forming the neckpiece 3 is provided with second co-operating attachment means (10, 11) for a release attachment of the free end parts to each other when the blanket section is wrapped around the horse's neck, such as illustrated in figure 2. The second co-operating attachment means are formed in an analogous manner as the first co-operating attachment means.

The horse blanket further comprises a bowband 13 provided with an adjustment member 14 and extending at the transition between the neckpiece and the body piece. The adjustment member is for example formed by a belt and a buckle and enables to adjust the length of the bowband to the horse's size.

Preferably a set of belts and clips is fixed to the body piece 4 in such a manner that each element of said set each time extends at the height of a leg, thereby enabling to wrap the belt around the respective leg and fix it with the clip so as to enable a close fitting of the body piece around the leg.

When the user now wants to apply the horse blanket, according to the present invention, on the horse he or she will take place at one side of the horse, in particular the second side opposite to the first side where the flap 5 will extend. The user will apply the horse blanket in its open stage (figure 1) and start with laying the neckpiece 3 over the horse's mane. Once applied, the free end parts will fall down by means of gravity and extend on both sides of the neck. Thereafter, the user will apply the body piece and spread it over the back of the horse down to the tail. Again gravity will take care that the body piece falls along the back of the horse, thereby causing the flap 5 to extend between the foreleg and the hind leg of the horse situated on said first side.

Once the body piece is applied, the user will pick up the flap 5 forming the belly protector by simply bringing his or her arm in the space between the leg and pulling the flap towards the second side. The belly protector will then be fixed to the body piece by using the first attachment means (6, 7 and 8, 9). If the latter are formed by loops and hooks and belts and clips, the user will first fix the loop and hook (6, 7) by bringing them together. Thereafter, the user will fix the belts by means of the clips, thereby pulling on the belt so that the body piece and the belly protector are closely wrapped around the horse's body such as illustrated in figure 1. In such a manner, the blanket fits closely to the body and insects have no longer access to this part of the body.

The user will thereafter wrap the neckpiece around the horse's neck by bringing the free end parts in contact with each other and fix them to each other, thereby using the second attachment means in an analogous manner as the first one. As illustrated in figure 2, the user can by using the belts 11 closely fit the neckpiece to the neck in order to avoid that insects reach the horse's neck. As the bowband is already in place, the blanket remains rather fixed on the horse's body thereby avoiding that the horse could toss it off while applying the neckpiece.

Although the user could first fix the neckpiece before fixing the belly protector, it is nevertheless preferred to first fix the belly protector as this causes already a suitable attachment of the horse blanket before starting with the neckpiece thereby avoiding that the horse would toss off the blanket when applying the neckpiece.

As will become clear from the present description, there is no need for the user to go from one side of the horse to the other as everything can be done from a same side. Moreover, there is also no need to pull the neckpiece over the head thereby avoiding that the view of the horse is temporarily cut off, which could frighten the horse.

Once the neckpiece, the body piece and the belly protector are applied, the user will tighten the bowband 13 by means of the clips 14 thereby causing that the blanket is well wrapped around the bow.

If the blanket is provided with a set of belts and clips, the user will tighten them around the respective horse legs, thereby avoiding that insects could reach the body by gaps left around the upper part of the legs.

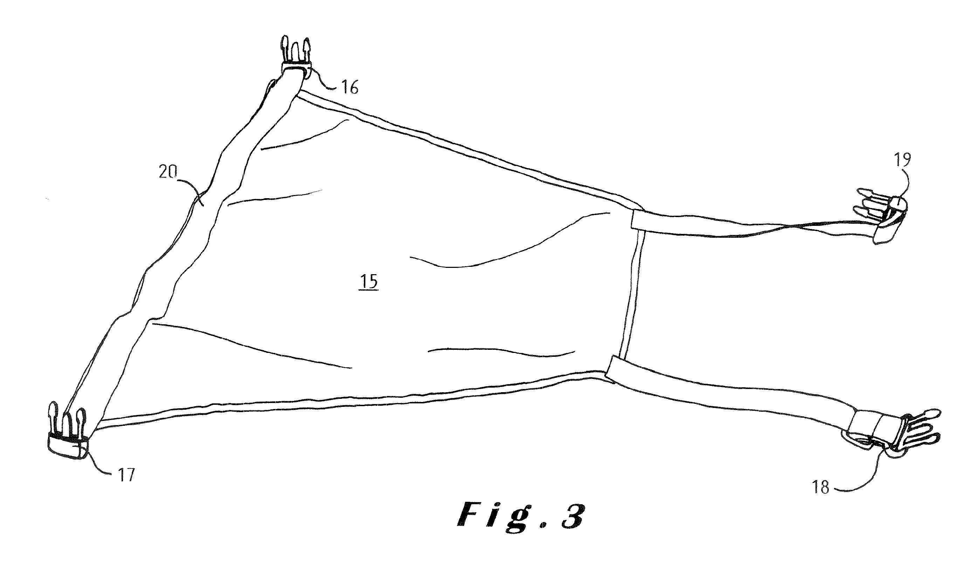

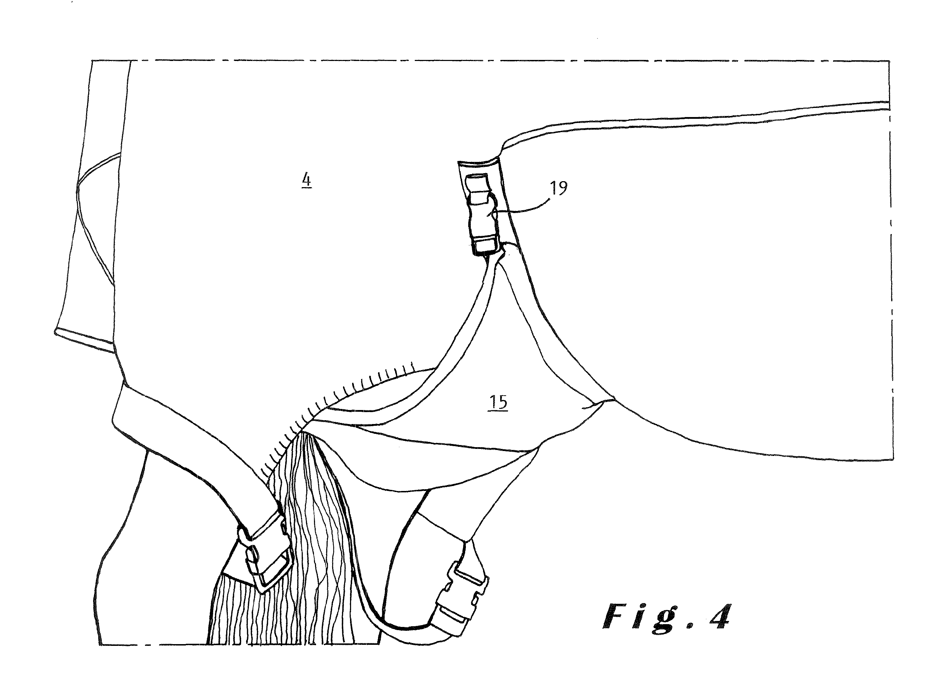

In particular for mares, an udder protector 15 can be provided as illustrated in figure 3. The udder protector is preferably made of the same textile material as the rest of the blanket. The udder protector and the body piece 4 are provided with third co-operating attachment means (16, 17, 18, 19, 20) for a release attachment of the udder protector to the body piece. The third attachment means are analogous to the first and second attachment means. Once the body and the neckpiece are applied, the udder protector is applied, as illustrated in figure 4, thereby using the third attachment means. The udder protector is preferably trapezium shaped, whereby the longest side is applied in front of the hind legs.

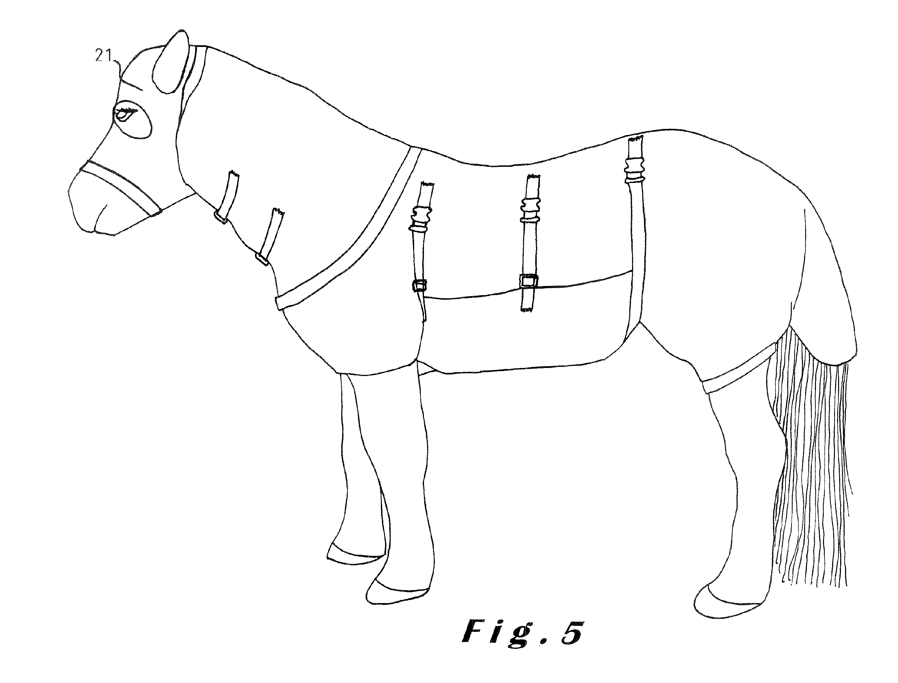

As illustrated in figure 5, the horse blanket according to the invention preferably further comprises a head mask 21 provided for being applied over the head. The head mask has two openings at the height of the eyes. The neckpiece and the head mask are provided with fourth co-operating attachment means for a release attachment of the head mask to the neckpiece. The fourth attachment means are comparable to the other attachment means. The head mask is applied by pulling it over the horse's head. As the head mask is much smaller than the neckpiece, the time during which the view of the horse is cut off is minimal so that the risk to frighten the horse is seriously reduced.

## Claims

1. A horse blanket comprising a neckpiece and a body piece having a belly protector, said neckpiece being provided for being applied around a neck of the horse, said body piece being provided for being spread over the back of the horse down to the tail and said belly protector being provided for being spread over the belly of the horse, **characterised in that** said belly protector is formed by a flap attached to said body piece along a first side thereof, said flap and said body piece being provided with first co-operating attachment means for a release attachment of said belly protector to a second side of said body piece, said second side being situated opposite to side first side.

2. The horse blanket as claimed in claim 1, **characterised in that** said neckpiece is formed by an open blanket section having free end parts, in such a manner as to be laid down over the mane of the horse when applying the blanket on the horse thereby enabling said free end parts to freely extend along both sides of the neck, said open blanket section being provided with second co-operating attachment means for a release attachment of said free end parts to each other when said blanket section is wrapped around said neck.

3. The horse blanket as claimed in claim 1 or 2, **characterised in that** it further comprises an udder protector, said udder protector and said body piece being provided with third co-operating attachment means for a release attachment of said udder protector to said body piece.

4. The horse blanket as claimed in any one of the claims 1 to 3, **characterised in that** it further comprises a head mask, said head mask and said neckpiece being provided with fourth co-operating attachment means for a release attachment of said head mask to said neck piece.

5. The horse blanket as claimed in any one of the claims 1 to 4, **characterised in that** said co-operating attachment means comprise loop and hook means, said hook being provided to engage with said loop.

6. The horse blanket as claimed in any one of the claims 1 to 5, **characterised in that** said co-operating attachment means comprise belts and clips.

7. The horse blanket as claimed in any one of the claims 1 to 6, **characterised in that** said belly protector is stitched along said first side of said body piece.

8. The horse blanket as claimed in any one of the claims 1 to 7, **characterised in that** it comprises a bowband provided with an adjustment member, in such a manner as to adjust a length of said bowband to the dimension of the horse.
